# EUROPEAN PATENT APPLICATION

(11) **EP 3 647 011 A1**
(43) Date of publication of application: **06.05.2020**
(21) Application number: 19188782.7
(22) Date of filing: 29.07.2019
(51) Int. Cl.: B29C 35/02, B29D 23/00, F16L 11/08

(54) **RUBBER HOSE MANUFACTURING APPARATUS**

(30) Priority: 05.11.2018 KR 20180134349
(71) Applicant: HS R & A Co., Ltd., Yangsan-si, Gyeongsangnam-do (KR)
(72) Inventor: KIM, Guk Hyun, 50592 Gyeongsangnam-do (KR); KIM, Keum Seok, 50592 Gyeongsangnam-do (KR)
(74) Representative: Tiburzi, Andrea

(57) **Abstract**

Disclosed is a rubber hose manufacturing apparatus (200) including a vulcanization kiln (210) configured to be hermetically sealable and to be capable of accommodating a rubber hose (100) therein, a heater core (220) disposed in the vulcanization kiln, and a compressor (230) configured to communicate with the outside of the vulcanization kiln and to supply air into the vulcanization kiln. Other embodiments are possible.

## Description

### BACKGROUND

### 1) FIELD

The disclosure relates to an apparatus for manufacturing a rubber hose including a plurality of layers including a knitted layer.

### 2) DESCRIPTION OF RELATED ART

The above information is presented as background information only to assist with an understanding of the disclosure. No determination has been made, and no assertion is made, as to whether any of the above might be applicable as prior art with regard to the disclosure.

Generally, a brake apparatus for a vehicle includes a rubber hose that carries a working fluid, which causes brake pads into close contact with a brake disk in order to obtain a brake action, in which the rubber hose may include a plurality of layers constituted by inserting a knitted layer of a steel wire or polyester into the rubber hose such that the rubber hose is capable of withstanding a high temperature and pressure.

In order to ensure the heat resistance and pressure resistance performance of the rubber hose, it is necessary that the plurality of layers are firmly bonded together. Accordingly, various methods for firmly bonding a plurality of layers of a rubber hose have been researched.

Conventionally, a rubber hose is made as a continuous tube body, and a vulcanization process is carried out by passing oil through a vulcanization pipe having a length of several tens of meters using the oil as a heat transfer medium. The production and disposition of the vulcanization pipe of tens of meters requires enormous expense and large site.

Alternatively, a vulcanization process is performed in such a manner in which a rubber hose cut into a predetermined length is put into a vulcanization kiln and is steamed by supplying hot steam. In this case, moisture permeates into gaps between the layers of the rubber hose, increasing the probability of occurrence of defects in the vulcanization process, and the rubber hose manufacturing apparatus itself is corroded and damaged by moisture, resulting in degraded durability.

### SUMMARY

The disclosure provides a rubber hose manufacturing apparatus that is capable processing a rubber hose in a manner of suppressing the occurrence of unbonded or peeled portions between a plurality of layers of the rubber hose, and that occupies less space.

A rubber hose manufacturing apparatus according to an embodiment of the disclosure may include a vulcanization kiln configured to be hermetically sealable and to be capable of accommodating a rubber hose therein, a heater core disposed in the vulcanization kiln, and a compressor configured to communicate with the outside of the vulcanization kiln and to supply air into the vulcanization kiln.

The vulcanization kiln may include a first kiln having a cylindrical shape, one side of which is opened, and configured to accommodate the rubber hose therein, and a second kiln having a cylindrical shape and enclosing the first kiln.

The second kiln may be formed to be larger than the first kiln so as to form a flow path between the first kiln and the second kiln, the compressor may be disposed in the second kiln at a position corresponding to a remaining side of the first kiln so as to supply air from the outside into the second kiln, and the air supplied by the compressor is supplied into the first kiln through the first flow path.

The heater core may be disposed inside the first kiln adjacent to the remaining side of the first kiln.

According to the disclosure, it is possible to bond a plurality of layers of a rubber hose by a dry pressurized vulcanization method to minimize peeling portions that may be formed between a plurality of layers, and it is also possible to reduce size of the rubber hose manufacturing apparatus itself. Since no moisture is not utilized, it is possible to solve the corrosion problem of the manufacturing apparatus.

### BRIEF DESCRIPTION OF THE DRAWINGS

For a more complete understanding of the disclosure and its advantages, reference is now made to the following description taken in conjunction with the accompanying drawings, in which like reference numerals represent like parts:
FIG. 1 is a view of a rubber hose, which is capable of being produced by a rubber hose manufacturing apparatus according to an embodiment of the disclosure; and
FIG. 2 is a conceptual view illustrating a rubber hose manufacturing apparatus according to an embodiment of the disclosure.

### DETAILED DESCRIPTION

Hereinafter, various embodiments of the disclosure will be described with reference to the accompanying drawings. The embodiments and the terms used therein are not intended to limit the technology disclosed herein to specific forms, and should be understood to include various modifications, equivalents, and/or alternatives to the corresponding embodiments. In describing the drawings, similar reference numerals may be used to designate similar constituent elements.

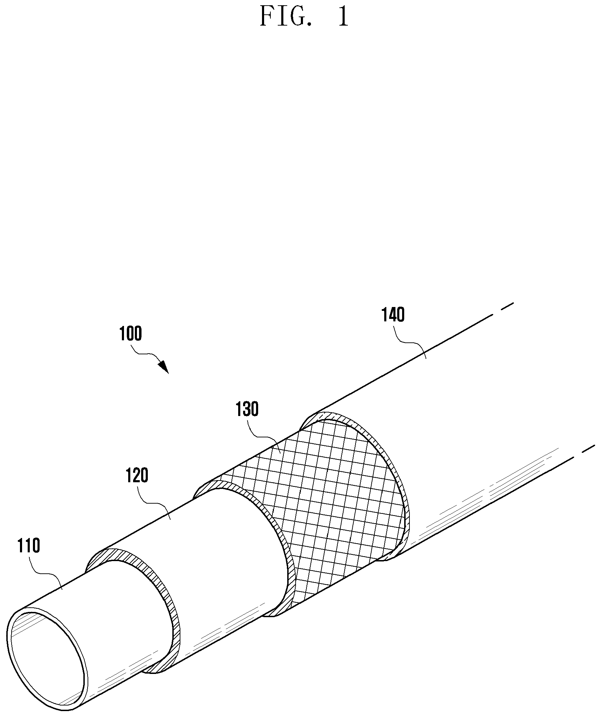

FIG. 1 is a view of a rubber hose 100, which is capable of being produced by a rubber hose manufacturing apparatus 200 according to an embodiment of the disclosure.

Referring to FIG. 1, the rubber hose 100 according to an embodiment of the disclosure may have a four-layer structure in cross section. As one of various embodiments, the rubber hose 100 having the simplest four-layer structure in cross section will be described as an example, but the disclosure is not limited thereto.

With reference to the state shown in FIG. 1, an inner layer 110, an intermediate layer 120, a reinforcing thread layer 130, and an outer layer 140 may be sequentially formed from the innermost center portion. The intermediate layer 120 is formed to enclose the inner layer 110, the reinforcing thread layer 130 is formed to enclose the intermediate layer 120, and the outer layer 140 is formed to surround the reinforcing thread layer 130.

The inner layer 110 may be formed of, for example, rubber containing fluorine.

The intermediate layer 120 may be formed of acrylic rubber, but it is possible to use any kind of rubber for the intermediate layer 120 as long as the rubber is vulcanized with a vulcanizing agent. The intermediate layer 120 is directly bonded to the inner layer 110 by being vulcanized together with the inner layer 110.

The reinforcing thread layer 130 is formed between the outer layer 140 and the intermediate layer 120 and may be formed of a polyamide-based or metal-made reinforcing thread.

The outer layer 140 may be formed of acrylic rubber, which is excellent in weather resistance and heat resistance.

Inter-layer bonding in the rubber hose 100 described above may be ensured through a pressurized vulcanization process.

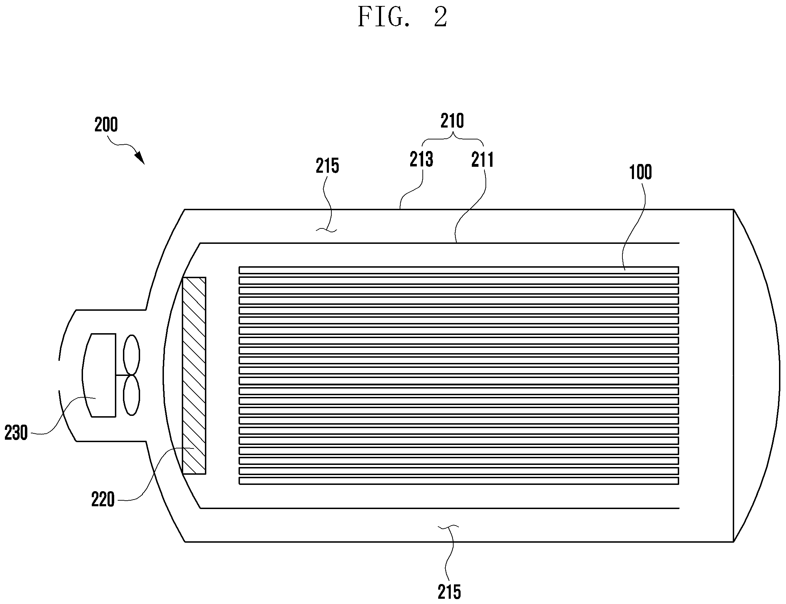

FIG. 2 is a conceptual view illustrating a rubber hose manufacturing apparatus 200 according to an embodiment of the disclosure.

The rubber hose manufacturing apparatus 200 according to an embodiment of the disclosure may include a vulcanization kiln 210, a heater core 220, and a compressor 230.

The vulcanization kiln 210 according to an embodiment of the disclosure may be configured in a structure that is hermetically sealable such that a predetermined pressure is formed therein. The vulcanization kiln 210 is capable of accommodating the rubber hose 100 shown in FIG. 1 so as to cause the various layers of the rubber hose 100 to be bonded to each other.

The vulcanization kiln 210 according to an embodiment of the disclosure may include a first kiln 211 and a second kiln 213. The first kiln 211 has a cylindrical shape, one side of which is opened, and the rubber hose 100 may be disposed inside the first kiln 211. The second kiln 213 may be formed in a cylindrical shape larger than the first kiln 211 so as to house the first kiln 211 therein. Since the second kiln 213 is formed to be larger than the first kiln 211 and to house the first kiln 211, the vulcanization kiln 210 may be formed in a double-wall structure, and a flow path 215 may be formed between the first kiln 211 and the second kiln 213.

The compressor 230 according to an embodiment of the disclosure may be disposed in the second kiln 213 at a position corresponding to the position on the other side of the first kiln 211 so as to supply air from the outside into the second kiln 213. The supplied air is capable of being supplied to the rubber hose 100 through the opened portion at the one side of the first kiln 211 via the flow path 215 between the first kiln 211 and the second kiln 213. The compressor 230 is capable of continuously supplying air from the outside into the second kiln 213 so as to increase the internal pressure of the second kiln 213. In this process, when the high-pressure air is directly brought into contact with the hose, a defect may occur in the rubber hose 100 during the vulcanization process. Thus, the air may be supplied to be bypassed through the flow path 215.

Preferably, the compressor 230 according to an embodiment of the disclosure may generate a pressure of about 6 kgf/cm². By developing a high-pressure state inside the vulcanization kiln 210 so as to pressurize the rubber hose 100, it is possible to make the layers of the rubber hose 100 well bonded to each other during the vulcanization of the rubber hose 100, and it is also possible to prevent the outer layer 140 from swelling during the vulcanization of the rubber hose 100.

The heater core 220 according to an embodiment of the disclosure may be disposed inside the first kiln 211 adjacent to the other side of the first kiln 211. The heater core 220 heats the air supplied through the compressor 230 in order to advance the vulcanization and interlayer bonding process of the rubber hose 100. The temperature of the air inside the vulcanization kiln 210 may be raised quickly by disposing the heater core 220 at the initial entry of air introduced through the compressor 230. However, the rubber hose 100, which first contacts the hot air passing through the heater core 220, may be damaged due to an increase in temperature beyond necessity. Therefore, by disposing the heater core 220 at the other side of the first kiln 211, it is possible to cause the temperature inside the kiln 210 to be increased evenly.

A rubber hose manufacturing apparatus 200 according to an embodiment of the disclosure may include a vulcanization kiln 210 that is hermetically sealable and is configured to be capable of accommodating a rubber hose 100 therein, a heater core 220 disposed in the vulcanization kiln 210, and a compressor 230 communicating with the outside of the vulcanization kiln 210 and configured to supply air into the vulcanization kiln 210.

The vulcanization kiln 210 includes a first kiln 211 having a cylindrical shape, one side of which is opened and configured to accommodate the rubber hose 100 therein, and a second kiln 213 having a cylindrical shape and enclosing the first kiln 211.

The second kiln 213 may be formed to be larger than the first kiln 211 so as to form a flow path 215 between the first kiln 211 and the second kiln 213, the compressor 230 may be disposed in the second kiln 213 at a position corresponding to a remaining side of the first kiln 211 so as to supply air from the outside into the second kiln 213, and the air supplied by the compressor 230 may be supplied into the first kiln 211 through the first flow path 215.

The heater core 220 may be disposed inside the first kiln 211 adjacent to the remaining side of the first kiln 211.

Although the disclosure has been described and illustrated with reference to the particular embodiments thereof, it will be apparent to those skilled in the art that various improvements and modifications of the disclosure can be made without departing from the technical idea of the disclosure provided by the following claims.

## Claims

1. A rubber hose manufacturing apparatus comprising:
a vulcanization kiln configured to be hermetically sealable and to be capable of accommodating a rubber hose therein;
a heater core disposed in the vulcanization kiln; and
a compressor configured to communicate with an outside of the vulcanization kiln and to supply air into the vulcanization kiln.

2. The rubber hose manufacturing apparatus of claim 1, wherein the vulcanization kiln includes:
a first kiln having a cylindrical shape, one side of which is opened, and configured to accommodate the rubber hose therein, and
a second kiln having a cylindrical shape and enclosing the first kiln.

3. The rubber hose manufacturing apparatus of claim 2, wherein the second kiln is formed to be larger than the first kiln so as to form a flow path between the first kiln and the second kiln,
the compressor is be disposed in the second kiln at a position corresponding to a remaining side of the first kiln so as to supply air from the outside into the second kiln, and
the air supplied by the compressor is supplied into the first kiln through the first flow path.

4. The rubber hose manufacturing apparatus of claim 3, wherein the heater core is disposed inside the first kiln adjacent to the remaining side of the first kiln.
